# EUROPÄISCHE PATENTSCHRIFT

(11) **EP 2 591 053 B1**
(45) Veröffentlichungstag und Bekanntmachung des Hinweises auf die Patenterteilung: **03.12.2014**
(21) Anmeldenummer: 11725386.4
(22) Anmeldetag: 01.06.2011
(51) Int. Cl.: C08L 33/12, C08L 97/02

(54) **VERBUNDWERKSTOFF AUS EINEM ZELLULOSEHALTIGEN MATERIAL UND EINEM KUNSTSTOFF**
COMPOSITE MATERIAL MADE OF A MATERIAL CONTAINING CELLULOSE AND A PLASTIC MATERIAL
MATÉRIAU COMPOSITE CONTENANT UN MATÉRIAU CELLULOSIQUE ET UNE MATIÈRE PLASTIQUE

(30) Priorität: 05.07.2010 DE 102010030927
(43) Veröffentlichungstag der Anmeldung: 15.05.2013
(73) Patentinhaber: Evonik Röhm GmbH, 64293 Darmstadt (DE)
(72) Erfinder: SCHÜTZ, Carlo, 64409 Messel (DE); ROTH, Christian, 64686 Lautertal (DE); CARLOFF, Rüdiger, 64291 Darmstadt (DE); SCHULTES, Klaus, 65193 Wiesbaden (DE); KHRENOV, Victor, 60323 Frankfurt (DE); REINHEIMER, Eric, 64846 Gross-Zimmern (DE)
(86) Internationale Anmeldenummer: PCT/EP2011/059008
(87) Internationale Veröffentlichungsnummer: WO 2012/004060

(56) Entgegenhaltungen:
- EP-A1- 0 982 110
- EP-A1- 1 918 328
- FR-A- 1 575 752

## Beschreibung

Die vorliegende Erfindung betrifft neuartige Verbundmaterialien aus zumindest einem zellulosehaltigen Material, bevorzugt Holz, und zumindest einem Kunststoff, mit verbesserten mechanischen Eigenschaften und verbesserter Witterungsbeständigkeit, ein Verfahren zu deren Herstellung sowie deren Verwendung.

Verbundmaterialien aus zumindest einem zellulosehaltigen Material und zumindest einem Kunststoff werden heutzutage insbesondere in Form von Holz-Kunststoff-Verbundwerkstoffen, sogenannte WPCs "Wood plastic composites", großtechnisch hergestellt. Im Rahmen der nachfolgend beschriebenen Erfindung werden die Begriffe "Holz-Kunststoff-Verbundmaterial(ien)", "Holz-Kunststoff-Verbundwerkstoff(e)" und "WPC(s)" synonym verwendet. Die Begriffe "Verbundmaterial" und "Verbundwerkstoff" werden ebenfalls synonym verwendet.

Historisch betrachtet werden Vollholz und traditionelle Holzwerkstoffe in der Regel als Bau- und Möbelwerkstoffe genutzt. Die WPC-Materialien haben diese klassischen Anwendungsbereiche aufgrund von verbesserten Formgebungsverfahren um wesentliche neue Einsatzmöglichkeiten erweitert.

Bei WPC Materialien handelt es sich um eine Verbindung von Holzpartikeln (wie Holzsplitter, Sägespäne, Holzfasern oder Holzmehle) mit einer Kunststoffmatrix. Als Kunststoffmatrix dienen in der Regel thermoplastische Kunststoffe.

Bei der ursprünglichen Entwicklung der WPCs in Nordamerika wurde Holz primär als billiger Füllstoff eingesetzt. Die Kosten für die Holzspäne liegen bei einem Bruchteil der alternativ dafür eingesetzten Kunststoffe, womit der Holzanteil die Materialkosten im Produkt verbilligt. Im Vergleich zu den eingesetzten Kunststoffen besitzt Holz ein höheres Elastizitätsmodul, so dass sich bei einer optimierten Holz-Kunststoff-Kombination gegenüber dem reinen Kunststoff bessere mechanische Eigenschaften ergeben.

Weltweit dominieren drei Kunststoffe in beinahe allen kommerziell hergestellten WPC-Materialien. Während in Amerika vorwiegend Polyethylen (PE) zum Einsatz gelangt, wird in Europa hauptsächlich Polypropylen (PP) verwendet. In Asien wird sehr häufig Polyvinylchlorid (PVC) als WPC-Kunststoff genutzt. Allen drei Kunststoffen ist gemein, das sie Massenkunststoffe darstellen und daher relativ preisgünstig zu haben sind. Dieser kommerzielle Gesichtspunkt ist mit unter ein Grund, warum sich die WPC-Forschung maßgeblich nur mit den genannten thermoplastischen Kunststoffen beschäftigt hat.

Auf der anderen Seite ist es nach wie vor eine Herausforderung, Naturfasern (wie z.B. Zellulose) an Polymere dauerhaft anzubinden. Bei den genannten Kunststoffen PE, PP und PVC ist die Anbindung an Holzfasern mittels Haftvermittler infolge einer Jahrzehnte langen Entwicklung hinreichend gut gelöst.

Die derzeitige Weiterentwicklung der WPC Werkstoffe beschäftigt sich neben der Optimierung der Prozesstechnologie sehr stark mit der Verbesserung von Produkteigenschaften bzw. mit auf für bestimmte Einsatzzwecke maßgeschneiderten Eigenschaften.

WPC-Werkstoffe werden derzeit vornehmlich im Außeneinsatz verwendet. Eine große Anwendung für WPC sind Terrassenpaneele, sogenannte "Deckings". Hier konkurrieren WPC Materialien hauptsächlich gegen Edelhölzer aus subtropischen Regionen. In Bauanwendungen erwartet man von WPC Materialien neben der Materialfestigkeit höchste Dauerhaftigkeit, mindestens aber eine vergleichbare zu resistenten Naturhölzern.

Aufgrund der verwendeten Einsatzstoffe unterliegen WPC-Materialien in der Regel im Außenbereich einer Veränderung durch Witterungseinflüsse, sofern sie nicht durch eine Oberflächenvergütung geschützt werden. Der Grad der Alterung ist einerseits abhängig von der Resistenz der verwendeten Holzfasern, andererseits auch vom Langzeitverhalten des eingesetzten Kunststoffs.

Es ist allgemein bekannt, dass Kunststoffe sehr weit gefasste Produkteigenschaftsbereiche aufweisen. Dieses betrifft sowohl thermische als auch mechanische und Langfrist-Eigenschaften. Vor dem Hintergrund der Entwicklung dauerhafter WPC Materialien für den Außenbereich besteht somit nach wie vor ein Bedarf an Verbundwerkstoffen mit besserer Witterungsbeständigkeit im Vergleich zu WPCs auf Basis von Polyolefinen.

Die Herstellung von WPC Materialien geschieht häufig über Spritzguss- bzw. Extrusionsverfahren und findet somit durch Plastifizierungsvorgänge bei Schmelzetemperatur der Kunststoffkomponente statt. Auch, aber eher weniger verbreitet, sind nass-chemische Polymerisationsprozesse mit Holzpartikeln.

Polymethylmethacrylat, kurz PMMA, ist bekannt für extreme Witterungsbeständigkeit und hohe mechanische Festigkeiten. Es ist damit im Eigenschaftsspektrum gut geeignet für Bauanwendungen. Für WPC-Anwendungen konnte dieses Material bislang jedoch nicht eingesetzt werden, da zu hohe Verarbeitungstemperaturen bei der Extrusion notwendig waren und dadurch Schädigungen der Holzpartikel verursacht wurden. Ferner ist das Problem der Anbindung des PMMAs an die Holzpartikel bislang nicht zufriedenstellend gelöst.

Ausgehend vom zuvor beschriebenen Stand der Technik bestand daher die Aufgabe darin, Verbundmaterialien aus zumindest einem zellulosehaltigen Material, bevorzugt Holz, und zumindest einem Kunststoff mit verbesserter Witterungsbeständigkeit und verbesserten mechanischen Eigenschaften sowie ein Verfahren zu dessen Herstellung bereitzustellen.

Eine weitere Aufgabe bestand darin, witterungsbeständige WPC-Materialien ohne zusätzliche Oberflächenvergütung bereitzustellen.

Weitere nicht explizit genannte Aufgaben ergeben sich aus dem Gesamtzusammenhang der nachfolgenden Beschreibung, Beispiele und Ansprüche.

Der vorliegenden Erfindung lag die Idee zu Grunde, unter Verwendung von Poly(alkyl)(meth)acrylat, einem thermoplastischen Kunststoff mit hervorragender Witterungsbeständigkeit, neuartige Verbundmaterialien herzustellen. Dabei ist es gelungen, die Stärken dieses Kunststoffs mit den Vorteilen der zellulosehaltigen Komponenten zu maßgeschneiderten Verbundmaterialien zu verbinden.

Die Schlüsselaufgabe hierbei war es, das zellulosehaltige Material, insbesondere Natur- oder Holzfasern, an das Polymer hinreichend gut anzuhaften, anzuknüpfen bzw. anzubinden. Dies wurde dadurch erreicht, dass erfindungsgemäß ein Copolymer umfassend zumindest ein Poly(alkyl)(meth)acrylat und zumindest ein zyklisches Carbonsäureanhydrid-Derivat verwendet wird. Ferner gelang es den Erfindern, besonders geeignete Poly(alkyl)(meth)acrylate sowie besonders geeignete Zusatzstoffe zu finden.

Gegenstand der vorliegenden Erfindung ist daher ein Verbundmaterial aus zumindest einer zellulosehaltigen Komponente, bevorzugt Holz, und zumindest einem Kunststoff, dadurch gekennzeichnet, dass zumindest ein Kunststoff aus einem Copolymer, umfassend zumindest ein Poly(alkyl)(meth)acrylat und zumindest ein zyklisches Carbonsäureanhydrid-Derivat, besteht oder ein Copolymer, umfassend zumindest ein Poly(alkyl)(meth)acrylat und zumindest ein zyklisches Carbonsäureanhydrid-Derivat, bevorzugt zusammen mit weiteren Polymeren und/oder Additiven und/oder Hilfsstoffen, umfasst.

Gegenstand der vorliegenden Erfindung ist zudem ein Verfahren, bei dem zumindest ein Copolymer umfassend zumindest ein Poly(alkyl)(meth)acrylat und zumindest ein zyklisches Carbonsäureanhydrid-Derivat, optional zusammen mit weiteren Komponenten, mit zumindest einem zellulosehaltigen Material vermischt und anschließend zu einem Verbundmaterial verarbeitet wird.

Gegenstand ist ebenfalls die Verwendung des erfindungsgemäßen Verbundmaterials, insbesondere als Werkstoff in Bereichen mit erhöhter Feuchtigkeitseinwirkung, insbesondere im Außenbereich, wie z. B. als Bodenbeläge, z. B. als Terrassenpaneele etc., als Konstruktionsmaterialien, wie z. B. als Konstruktionshölzer, Bretter, Balken, Treppen und Treppenstufen, Pfosten, Schalungstafeln, Gartenhütten, Spieltürme, Spielgeräte, Sandkästen, Carports, Pavillons, Türzargen, Türblätter, Fensterbänke etc., als Wandelemente, als Wandverkleidungen, Schallschutzelemente, Balustraden, als Deckenverkleidungen, als Dachabdeckungen, im Schiffsbau oder zum Bau von Hafenanlagen, z. B. Bootsstegen, Bootsabweiser, Schiffdecks etc., als wartungsfreier Möbelwerkstoff im Innen- und Außenbereich, wie z.B. Stühle, Liegen, Regale, Theken, Gartenbänke, Küchenmöbel, Arbeitsplatten, Badmöbel etc., als Behälter bzw. Einfassungen, wie z. B. Raseneinfassungen, Beeteinfassungen, Rollrabatte, Blumentöpfe, Pflanztröge etc. als Spielbauklötze und im Automobilinnendekor und in der Automobilaußenverkleidung sowie als Wohnwagenanbauteile.

Das erfindungsgemäße Verbundmaterial ist für den Praxiseinsatz im Freien bestens geeignet, da es eine geringe Wasseraufnahme, große Formstabilität durch geringes Quellverhalten und hohe mechanische Festigkeit aufweist.

Durch die Möglichkeit der Verarbeitung bei Temperaturen kleiner gleich 225°C, bevorzugt kleiner gleich 220°C können Schädigungen des zellulosehaltigen Materials, insbesondere bei Verwendung von Holz, vermieden und Energiekosten gesenkt werden.

Insbesondere beim Einsatz eines Copolymers umfassend zumindest ein Poly(alkyl)(meth)acrylat und zumindest ein zyklisches Carbonsäureanhydrid-Derivat alleine oder in Verbindung mit einem Poly(alkyl)(meth)acrylat-Matrixpolymeren kann man ein Verbundmaterial herstellen, dass sich erstaunlicher Weise mit einem Holzanteil von 70 Gew.% bei ca. 205°C gut extrudieren lässt. Ferner kann man auf diese Weise sogar WPCs mit einem Holzanteil von bis zu 80 Gew.% erhalten.

Die erfindungsgemäßen Extrudate zeigen ein gleiches oder besseres Feuchteverhalten als WPCs auf Polyolefinbasis. Hinzu kommen die besseren mechanischen Eigenschaften und die exzellente Witterungsstabilität der erfindungsgemäßen Kunststoffmatrix gegenüber Polyolefinen.

In praktischen Versuchen konnte gezeigt werden, dass durch den Einsatz des Copolymers umfassend zumindest ein Poly(alkyl)(meth)acrylat und zumindest ein zyklisches Carbonsäureanhydrid-Derivat die Wasseraufnahme im Vergleich zum Einsatz von reinem PMMA ohne Copolymer von ca. 30 Gew.% auf unter 5 Gew.% reduziert werden kann.

Somit ist es erstmals gelungen, ein qualitativ hochwertiges WPC auf Poly(alkyl)(meth)acrylat-Basis herzustellen.

Die vorliegende Erfindung wird nachfolgend im Detail beschrieben.

Die Qualität von WPC Materialien ist stark abhängig von der Einhaltung verschiedener Parameter. So sind die Fließeigenschaften des Polymeren ebenso von Bedeutung, wie die Einhaltung bestimmter Temperaturobergrenzen, ab derer Holzpartikel beginnen, geschädigt zu werden. Es hat sich herausgestellt, dass diese Temperatur bei der Herstellung von WPC Werkstoffen unter 225°C, bevorzugt unter 220°C liegen sollte, um die Verkohlung der Holzpartikel weitgehend auszuschließen. Gleichzeitig sollte bei dieser Temperatur das Polymer aufgeschmolzen sein und eine ausreichende Fließfähigkeit besitzen. Alleine diese Tatsache sprach bislang gegen einen Einsatz von PMMA, da Standard-PMMA erst über 230°C ein visko-elastisches Fließverhalten annimmt.

Es ist weiterhin entscheidend für den Gebrauch von WPC Materialien, dass praxisnahe Produkteigenschaften Mindestgrößen aufweisen bzw. Maximalgrenzen nicht überschreiten. Es sind dies beispielsweise die Gewichtszunahme durch Wasser, das Quellverhalten infolge Nässe, sowie Materialfestigkeiten, wie z.B. Biege- und Bruchfestigkeit.

Werkstoffe, z. B. Holzfasern, mit Zellulose als Hauptbestandteil sind extrem polar und hydrophil. Die Feuchtigkeitsaufnahme bis hin zu großen Materialtiefen wird maßgeblich durch die Hydrophilie des zellulosehaltigen Werkstoffs verursacht. In der vorliegenden Erfindung ist es durch Verwendung eines Copolymers umfassend zumindest ein Poly(alkyl)(meth)acrylat und zumindest ein zyklisches Carbonsäureanhydrid-Derivat als Haftvermittler und/oder Matrixmaterial gelungen, die Holzpartikel mit dem Polymeren sehr gut bis vollständig zu "umgeben" bzw. "einzuhüllen". Dadurch konnte die Wasseraufnahme signifikant reduziert werden.

In einer ersten bevorzugten Ausführungsform der vorliegenden Erfindung wird daher zumindest ein Copolymer umfassend zumindest ein Poly(alkyl)(meth)acrylat und zumindest ein zyklisches Carbonsäureanhydrid-Derivat als Matrixpolymer und gleichzeitig als Haftvermittler eingesetzt.

In einer zweiten bevorzugten Ausführungsform wird ein Copolymer umfassend zumindest ein Poly(alkyl)(meth)acrylat und zumindest ein zyklisches Carbonsäureanhydrid-Derivat als Haftvermittler zusammen mit einem Poly(alkyl)(meth)acrylat, als Matrixmaterial, compoundiert.

Das Copolymer umfassend zumindest ein Poly(alkyl)(meth)acrylat und zumindest ein zyklisches Carbonsäureanhydrid-Derivat kann mit statistischer Verteilung der Monomereinheiten aber auch als Propf-Copolymer, bei dem ein zyklisches Carbonsäureanhydrid-Derivat auf ein Poly(alkyl)(meth)acrylat gepfropft wird, verwendet werden. Als zyklische Carbonsäureanhydrid-Derivate werden bevorzugt solche mit einem 5-, 6- oder 7 gliedrigen Ring, besonders bevorzugt Maleinsäureanhydrid und Glutarsäureanhydrid, verwendet. Es kann vorzugsweise weitere Comonomere wie Styrol, α-Methylstyrol, (Meth)acrylsäure und (Alkyl)acrylate, (Alkyl)(meth)acrylamine, (Alkyl)(meth)acrylimide, N-Vinylpyrolidon, Vinyläcetat, Ethylen oder Propylen enthalten.

"Alkyl" im Copolymer umfassend zumindest ein Poly(alkyl)(meth)acrylat und zumindest ein zyklisches Carbonsäureanhydrid-Derivat steht für einen verzweigten oder unverzweigten, cyclischen oder linearen Alkylrest mit 1 bis 20, bevorzugt 1 bis 8, besonders bevorzugt 1 bis 4 Kohlenstoffatomen, welcher mit funktionellen Gruppen substituiert sein oder Heteroatome wie O, S oder N aufweisen kann. Bevorzugt handelt es sich um einen Methyl, Ethyl, Butyl oder Cyclohexyl-Rest. Besonders bevorzugt wird ein Copolymer wie es in der WO2005/10848 als "Copolymer (I)" offenbart wird, verwendet. Der Inhalt dieser Druckschrift wird hiermit explizit in die Beschreibung der vorliegenden Anmeldung mit aufgenommen.

Die Definition von "alkyl" im Poly(alkyl)(meth)acrylat-Matrixmaterial kann identisch sein mit der oben für das Copolymer angegebenen Definition. Besonders bevorzugt wird Polymethyl(meth)acrylat, Polyethyl(meth)acrylat oder Polybutyl(meth)acrylat verwendet.

Die Bezeichnung "(Meth)acrylat" steht sowohl für Methacralyte als auch für Acrylate als auch für Mischungen von beidem.

Bei dem erfindungsgemäß verwendeten Copolymer umfassend zumindest ein Poly(alkyl)(meth)acrylat und zumindest ein zyklisches Carbonsäureanhydrid-Derivat handelt es sich bevorzugt um ein niedrig-molekulares Copolymer.

Der Schmelzindex MVR [230°C, 3.8kg] des Copolymers umfassend zumindest ein Poly(alkyl)(meth)acrylat und zumindest ein zyklisches Carbonsäureanhydrid-Derivat liegt bevorzugt im Bereich von 1-30 ml/10min, besonders bevorzugt 2 -20 ml/10min und ganz besonders bevorzugt im Bereich von 3-15 ml/10min.

Der Anteil des gesamten Copolymers umfassend zumindest ein Poly(alkyl)(meth)acrylat und zumindest ein zyklisches Carbonsäureanhydrid-Derivat bezogen auf das Gesamtgewicht des erfindungsgemäßen Verbundmaterials liegt bevorzugt im Bereich von 0.5 Gew. % bis (100 - Anteil an zellulosehaltigem Material)Gew.% und besonders bevorzugt im Bereich von 2 Gew.-% bis ((100 - Anteil an zellulosehaltigem Material)/2) Gew.%.

Der Anteil des zyklischen Carbonsäureanhydrid-Derivat im Copolymer wiederum liegt bevorzugt im Bereich von 0.1 - 5 Gew.% und besonders bevorzugt im Bereich von 0.4 - 3 Gew.% bezogen auf das Gesamtgewicht des erfindungsgemäßen Verbundmaterials.

Wie bereits erwähnt, umfasst eine bevorzugte Ausführungsform der vorliegenden Erfindung ein Blend aus zumindest einem Copolymer umfassend zumindest ein Poly(alkyl)(meth)acrylat und zumindest ein zyklisches Carbonsäureanhydrid-Derivat als Haftvermittler sowie zumindest einem Poly(alkyl)(meth)acrylat als Matrixmaterial. Unter Poly(alkyl)(meth)acrylat Matrixmaterial ist dabei ein Matrixmaterial zu verstehen, dass ausschließlich Poly(alkyl)(meth)acrylat als Polymerkomponente enthält aber auch ein Matrixmaterial, das einen Blend aus verschiedenen Poly(alkyl)(meth)acrylaten oder Poly(alkyl)(meth)acrylat(en) und anderen Polymeren enthält aber auch ein Matrixmaterial, bei dem es sich um ein Copolymer aus zumindest einem Poly(alkyl)(meth)acrylat und weiteren, von zyklischen Carbonsäureanhydrid-Derivaten verschiedenen, Comonomeren, bevorzugt Styrol, α-Methylstyrol, (Meth)acrylsäure und/oder (Alkyl)acrylate, (Alkyl)(meth)acrylamine, (Alkyl)(meth)acrylimide, N-Vinylpyrolidon, Vinylacetat, Ethylen oder Propylen handelt.

Hinsichtlich des Poly(alkyl)(meth)acrylat Matrixmaterials hat sich dabei dessen Fließverhalten als Kriterium gezeigt durch dass insbesondere die Produktion optimiert werden kann. Das erfindungsgemäß als Matrixmaterial verwendete Poly(alkyl)(meth)acrylat weist daher bevorzugt einen Schmelzindex MVR [230°C, 3.8kg] im Bereich von 0,5 - 30 ml/10min, besonders bevorzugt 1-20 ml/10min und ganz besonders bevorzugt im Bereich von 1-10 ml/10min auf.

Versuche mit verschiedene Poly(alkyl)(meth)acrylat Qualitäten haben gezeigt, dass bei zu hochmolekularen Poly(alkyl)(meth)acrylat-Schmelzen eine Vermischung mit z. B. Holzpartikeln nur sehr schwer möglich ist, da beim notwendigen Temperaturanstieg eine einsetzende Schädigung der Holzpartikel gefunden wurde. Bei zu niedermolekularem Poly(alkyl)(meth)acrylat kann es zu Problemen mit dem "Aufschwimmen" der Holzfasern im Plastifiziergerät und somit zu Schwierigkeiten mit der Durchmischung der Komponenten kommen.

Neben dem Copolymer umfassend zumindest ein Poly(alkyl)(meth)acrylat und zumindest ein zyklisches Carbonsäureanhydrid-Derivat und ggf. einem Poly(alkyl)(meth)acrylat-Matrixpolymer umfasst das erfindungsgemäße Verbundmaterial auch eine zellulosehaltige Komponente, insbesondere Holzpartikel. Der Anteil der zellulosehaltigen Komponente in dem Verbundmaterial hat großen Einfluss auf die Produkteigenschaften. So werden einerseits die Flexibilität und mechanischen Eigenschaften verbessert sowie ein ökonomischer Vorteil erzielt. Andererseits führt ein hoher Anteil zu verstärkter Feuchtigkeitsaufnahme, so dass es schwierig ist, einen sehr hohen Anteil an zellulosehaltige Komponente zu realisieren. Mit dem erfindungsgemäßen Verbundmaterial ist es gelungen, insbesondere einen Holz-Füllstoffanteil von bis zu 80 Gew.%, bevorzugt 40 bis 80 Gew.%, besonders bevorzugt 50 bis 80 Gew.% und ganz besonders bevorzugt 60 bis 75 Gew.%, jeweils bezogen auf das Gesamtgewicht des Verbundmaterials zu realisieren.

Bei der erfindungsgemäß verwendeten zellulosehaltigen Komponente handelt es sich bevorzugt um Holz oder Papier oder Pappe oder andere zellulosehaltige Materialien. Bevorzugt weist die zellulosehaltige Komponente einen Zelluloseanteil von mindestens 20 Gew.-%, besonders bevorzugt mindestens 30 Gew.-%, ganz besonders bevorzugt mindestens 40 Gew.-% auf. insbesondere bevorzugt wird Holz verwendet. Hinsichtlich der Holzpartikel gibt es bei den erfindungsgemäßen Verbundmaterialien keine besonderen Beschränkungen. Beispielweise können Holzsplitter, Sägespäne, Holzfasern oder Holzmehle verwendet werden.

Es hat sich im Rahmen der vorliegenden Erfindung gezeigt, dass es vorteilhaft ist, wenn das Verbundmaterial ein Gleitmittel umfasst. Das Gleitmittel ist wichtig um eine gute Verarbeitbarkeit der Formmasse und niedrige Verarbeitungstemperaturen realisieren zu können. Als Gleitmittel können insbesondere Polyolefine, polare Esterwachse, Polyethylenwachse, Carbon- und Fettsäuren sowie deren Ester (z.B. Stearate) sowie langkettige Fettalkohole und Fettalkoholester verwendet werden. Der Anteil des Gleitmittels bezogen auf die Gesamtmasse des Verbundmaterials beträgt bevorzugt 0 - 5 Gew.%, besonders bevorzugt 0,1 - 4 Gew.%, ganz besonders bevorzugt 0,5 bis 4 Gew.% und speziell bevorzugt 1 bis 3 Gew.%.

Die erfindungsgemäßen Verbundmaterialien können weitere übliche Additive und/oder Hilfsstoffe wie z. B. Farbstoffe, Lichtstabilisatoren, IR-Absorber, antimikrobielle Wirkstoffe, Flammschutzmittel, Thermostabilisatoren, Antioxidantien, vernetzende Polymere, faserverstärkende Zusatzstoffe organischer oder anorganischer Art, Polysiloxane, Polysiloxanamine und/oder Polysiloxanimine enthalten.

In einer besonders bevorzugten Ausführungsform enthalten die erfindungsgemäßen Verbundmaterialien im Kunststoff ein Schlagzähmodifizierungsmittel, insbesondere in einem Anteil von 0,1 bis 15 Gew.%, bevorzugt 0,5 bis 10 Gew.% und ganz besonders bevorzugt 1 bis 6 Gew. %, jeweils bezogen auf die Masse der im Verbundwerkstoff enthaltenen Kunststoffkomponenten. Es können alle handelsüblichen Schlagzähmodifizierungsmittel verwendet werden, insbesondere Elastomerteilchen mit einem mittleren Teilchendurchmesser von 10 bis 300 nm (Messungen z. B. mit der Ultrazentrifugenmethode). Bevorzugt weisen die Elastomerteilchen einen Kern mit einer weichen Elastomerphase und zumindest einer daran gebundenen Hartphase auf.

Als besonders Vorteilhaft haben sich Holz-Kunststoff-Verbundmaterialien herausgestellt, die zu bis zu 80 Gew.% Holzpartikel sowie mindestens 15 Gew.% Poly(alkyl)(meth)acrylat aufweisen, jeweils bezogen auf das Gesamtgewicht des Verbundmaterials, wobei der Polymeranteil entweder a) aus einem Copolymer umfassend zumindest ein Poly(alkyl)(meth)acrylat und zumindest ein zyklisches Carbonsäureanhydrid-Derivat oder b) aus einem Blend von zumindest einem Poly(alkyl)(meth)acrylat-Matrixpolymer und zumindest einem Copolymer umfassend zumindest ein Poly(alkyl)(meth)acrylat und zumindest ein zyklisches Carbonsäureanhydrid-Derivat besteht.

In einer besonders bevorzugten Ausführungsform der vorliegenden Erfindung umfasst das erfindungsgemäße Verbundmaterial die folgenden Komponenten:

| | | |
|---|---|---|
| a) | zellulosehaltige Komponente, bevorzugt Holzfasern: | 40 - 80 Gew.% |
| b) | Copolymer umfassend zumindest ein Poly(alkyl)(meth)acrylat und zumindest ein zyklisches Carbonsäureanhydrid-Derivat: | 1 - 50 Gew.% |
| c) | Gleitmittel: | 0 - 5 Gew.%, bevorzugt 0,5 - 4 Gew.% |
| d) | Poly(alkyl)(meth)acrylat-Matrixpolymer: | 0 - 59 Gew.%, bevorzugt 1 - 57,5 Gew.% |
| e) | Farbstoff(e) | 0 - 5 Gew.% |
| f) | Lichtstabilisatoren | 0 - 0.5 Gew%, bevor-zugt 0.01 - 0.2 Gew. % |

wobei die Komponenten b) und d) zusammen 9,5 % bis 60 Gew. % des Gesamtgewichts der vier oben genannten Komponenten ausmachen und sich die Summe der Anteile der sechs o.g. Komponenten zu 100 Gew.% addiert. Hierbei bezieht sich 100 Gew.% auf das Gesamtgewicht der o.g. Komponenten. Dieses kann identisch mit dem Gesamtgewicht des Verbundmaterials sein, kann aber auch weniger als 100 Gew.% des Verbundmaterials betragen, wenn das Verbundmaterial noch andere als die o.g. sechs Komponenten umfasst. Besonders bevorzugt umfasst dass erfindungsgemäße Verbundmaterial als Kunststoffe nur die polymeren Komponenten b) und d) sowie ggf. e) und/oder f) und/oder zumindest ein

Schlagzähmodifizierungsmittel.

Das erfindungsgemäße Verbundmaterial kann hergestellt werden, in dem man zumindest ein Copolymer umfassend zumindest ein Poly(alkyl)(meth)acrylat und zumindest ein zyklisches Carbonsäureanhydrid-Derivat mit zumindest einer zellulosehaltigen Komponente und optional weiteren Komponenten, bevorzugt einem Poly(alkyl)(meth)acrylat-Matrixmaterial und/oder einem Gleitmittel und/oder einem Schlagzähmodifizierungsmittel und/oder einem anderen der o. g. Hilfsstoffe und/oder Additive, vermischt und zu einem Verbundmaterial verarbeitet. Diese Verarbeitung erfolgt bevorzugt durch Extrusion oder Spritzguss. Dabei wird bevorzugt bei einer Schmelztemperatur unterhalb von 230 °C, besonders bevorzugt unterhalb von 225 °C, ganz besonders bevorzugt von 170 bis 220 °C, speziell bevorzugt von 190 bis 215 °C und ganz speziell bevorzugt von 190 bis 210 °C plastifiziert.

Die erfindungsgemäßen Verbundmaterialien können in allen für WPC bekannten Anwendungen, insbesondere als Werkstoff in Bereichen mit erhöhter Feuchtigkeitseinwirkung, speziell im Außenbereich, wie z. B. als Bodenbeläge, z. B. als Terrassenpaneele etc., als Konstruktionsmaterialien, wie z. B. als Konstruktionshölzer, Bretter, Balken, Pfosten, Schalungstafeln, Gartenhütten, Spieltürme, Spielgeräte, Sandkästen, Carports, Pavillons, Türzargen, Türblätter, Fensterbänke etc., als Wandelemente, als Wandverkleidungen, Schallschutzelemente, Balustraden, als Deckenverkleidungen, als Dachabdeckungen, im Schiffsbau oder zum Bau von Hafenanlagen, z. B. Bootsstegen, Bootsabweiser, Schiffdecks etc., als wartungsfreier Möbelwerkstoff im Innen- und Außenbereich, wie z.B. Stühle, Liegen, Regale, Theken, Gartenbänke, Küchenmöbel, Arbeitsplatten, Badmöbel etc., als Behälter bzw. Einfassungen, wie z. B. Raseneinfassungen, Beeteinfassungen, Rollrabatte, Blumentöpfe, Pflanztröge etc., verwendet werden.

Die Schallschutzwirkung der erfindungsgemäßen Bauteile kann auf der Reflektion des Schalls aber auch auf der Absorption beruhen. Während zur Reflektion auch glatte Oberflächen der Bauteile ausreichend sind, werden zur Anwendung als Schallschutzelemente mit Schallschluckwirkung bevorzugt Bauteile aus den erfindungsgemäßen Verbundmaterialien hergestellt, deren Oberfläche derart strukturiert ist, dass durch die Strukturierung ein schallschluckender Effekt erzielt wird. Weiterhin ist es besonders bevorzugt aus den erfindungsgemäßen Verbundmaterialien Hohlkammerplatten oder Profile herzustellen, welche mit entsprechenden Öffnungen bzw. Bohrungen versehen sind, die es erlauben, dass die Schallwellen in das Bauteil eindringen. Dadurch kann ein signifikanter Schallschluckeffekt erzielt werden. Kombinationen bzw. Abwandlungen der beiden genannten Varianten der Schallschutzelemente sind von der vorliegenden Erfindung ebenfalls erfasst.

### Meßmethoden:

### Schmelzindex MVR

Der MVR [230°C, 3.8kg] wird bestimmt nach ISO 1133

### Wasseraufnahme (Koch-Test)

Die Wasseraufnahme wird in einem Koch-Test in Anlehnung an die Norm EN 1087-1 bestimmt. Hierzu wird ein 100mm langer Probenabschnitt in Dicke und Breite des Produktionsmaßes für 5 h in kochendem Wasser eingetaucht und nach ca. 60min Abkühlung in kaltem Wasser auf Quellung und gravimetrischer Wasseraufnahme geprüft.

### Bruchfestigkeit und Durchbiegung

Die Bestimmung der Bruchfestigkeit sowie der Durchbiegung bei 500 N Belastung der erfindungsgemäßen Verbundwerkstoffe geschieht in Anlehnung an DIN EN 310 ("Holzwerkstoffe - Bestimmung des Biege-Elastizitätsmoduls und der Biegefestigkeit").

Die nachfolgenden Beispiele dienen der näheren Erläuterung und dem besseren Verständnis der vorliegenden Erfindung schränken diese bzw. deren Umfang jedoch in keiner Weise ein.

### Vergleichsbeispiel 1

Eine PMMA Formmasse mittleren Molekulargewichts, PLEXIGLAS^{®} FM 6N bzw. PLEXIGLAS^{®} FM 7N von Evonik Röhm GmbH, Darmstadt, wurde mit einem Anteil von 70 Gew.% Holzfasern vermischt und extrudiert. In Folge von hoher Temperatur (233°C und höher) und starker Haftung am Extrusionswerkzeug kam es zur Zersetzung (Verkohlung) der Holzpartikel. Eine Plastifizierung der beiden Komponenten war nur sehr unzureichend möglich.

### Vergleichsbeispiel 2:

Die Extrusion gemäß Vergleichsbeispiel 1 wurde unter Verwendung des polaren Esterwachses LICOWAX E der Firma Clariant, Sulzbach, als Gleitmittel wiederholt. Dadurch konnte die Temperatur im Herstellprozess bei ca. 200-205°C gehalten und die Metallhaftung verhindert werden. Eine Zersetzung der Holzpartikel konnte vermieden werden.

Die so hergestellten PMMA-Holzverbunde hatten jedoch den Nachteil, dass die Wasseraufnahme im Koch-Test bei 100°C, zwischen 20 und 40 Gew.% lag. Dementsprechend stellte sich das Feuchte bedingte Quellverhalten als unzureichend dar. WPC-Produkte mit der Zusammensetzung gemäß Vergleichsbeispiel 2 zeigten in allen Abmessungen (Länge, Breite, Dicke) extreme Abweichungen von der Ursprungsdimension und waren somit für den Einsatz im Freien nicht geeignet.

### Beispiel 1

### Allgemeine Beschreibung:

In der Rezeptur von Vergleichsbeispiel 2 wurde der Mischung Poly(alkyl)methacrylat-Maleinsäureanhydrid-Copolymere entsprechend dem Copolymer (I) aus Beispiel A der WO 2005/108486 als Haftvermittler zugegeben.

Versuche zeigten, dass sich eine solche Mischung mit bis 75% Holzanteil im Bereich 210°C +/- 10K sehr gut plastifizieren lässt und WPC Extrudate hervorbringt, die eine sehr geringe Wasseraufnahme, hohe Dimensionsstabilität gegenüber Feuchte und eine hohe mechanische Stabilität aufweisen.

### Beispiel 1a

Der Versuch wurde wie in der allgemeinen Beschreibung durchgeführt. Es wurde ein Polymethylmethacrylat-Maleinsäureanhydrid-Copolymere entsprechend dem Copolymer (I) aus Beispiel A der WO 2005/108486, mit 10 Gew.% eingebautem Maleinsäureanhydrid als Haftvermittler verwendet.

Die Zusammensetzung der Einsatzmengen für die Extrusion gestaltete sich wie folgt:

| | |
|---|---|
| Holzfasern: | 70 Gew.% |
| Haftvermittler: | 10 Gew.% |
| Gleitmittel: LICOWAX E | 2,0 Gew.% |
| PMMA: PLEXIGLAS® 7N | 18 Gew.% |

Die anwendungstechnischen Tests des erhaltenen WPC's ergaben folgende Ergebnisse:

| | |
|---|---|
| Wasseraufnahme im Kochtest bei 100°C: | 4.3% |
| Bruchfestigkeit: | 4114 kN |
| Durchbiegung 500N: | 1.8 mm |

## Patentansprüche

1. Verbundmaterial aus zumindest einem zellulosehaltigen Material und zumindest einem Kunststoff,
**dadurch gekennzeichnet,**
**dass** zumindest ein Kunststoff aus einem Copolymer, umfassend zumindest ein Poly(alkyl)(meth)acrylat und zumindest ein zyklisches Carbonsäureanhydrid-Derivat, besteht oder besagtes Copolymer, bevorzugt zusammen mit weiteren Polymeren und/oder Additiven und/oder Hilfsstoffen, umfasst.

2. Verbundmaterial nach Anspruch 1,
**dadurch gekennzeichnet,**
**dass** es ein Copolymer umfassend zumindest ein Poly(alkyl)(meth)acrylat und zumindest ein zyklisches Carbonsäureanhydrid-Derivat als Haftvermittler sowie zumindest ein Poly(alkyl)(meth)acrylat-Matrixmaterial umfasst.

3. Verbundmaterial nach Anspruch 1 oder 2,
**dadurch gekennzeichnet,**
**dass** das Copolymer umfassend zumindest ein Poly(alkyl)(meth)acrylat und zumindest ein zyklisches Carbonsäureanhydrid-Derivat einen Schmelzindex MVR [230 °C, 3.8 kg] im Bereich von 1-30 ml/10min, bevorzugt im Bereich von 3-15 ml/10min. aufweist.

4. Verbundmaterial nach einem der Ansprüche 1 bis 3,
**dadurch gekennzeichnet,**
**dass** der Anteil des Copolymers umfassend zumindest ein Poly(alkyl)(meth)acrylat und zumindest ein zyklisches Carbonsäureanhydrid-Derivat bezogen auf das Gesamtgewicht des erfindungsgemäßen Verbundmaterials 0.5 Gew. % bis (100 - Anteil an zellulosehaltigem Material)Gew.%, 2Gew.% bis ((100 - Anteil an zellulosehaltigem Material)/2) Gew.%, beträgt.

5. Verbundmaterial nach einem der Ansprüche 1 bis 4,
**dadurch gekennzeichnet,**
**dass** der Anteil am zyklischen Carbonsäureanhydrid-Derivat bezogen auf das Gesamtgewicht des erfindungsgemäßen Verbundmaterials Bereich von 0.1 - 5 Gew.%, bevorzugt im Bereich von 0.4 - 3 Gew.%, liegt.

6. Verbundmaterial nach einem der Ansprüche 1 bis 5,
**dadurch gekennzeichnet,**
**dass** es sich bei dem zellulosehaltigen Material um Holz oder Papier oder Pappe, bevorzugt mit einem Zelluloseanteil mindestens 20 Gew.%, besonders bevorzugt mind. 30 Gew.%, ganz besonders bevorzugt mindestens 40 Gew.%, handelt.

7. Verbundmaterial nach einem der Ansprüche 1 bis 6,
**dadurch gekennzeichnet,**
**dass** es, jeweils bezogen auf das Gesamtgewicht des Verbundmaterials, bis zu 80 Gew.% Holzpartikel sowie mindestens 15 Gew.% Poly(alkyl)(meth)acrylat aufweist.

8. Verbundmaterial nach einem der Ansprüche 1 bis 7,
**dadurch gekennzeichnet,**
**dass** es die folgenden Komponenten:
| | | |
|---|---|---|
| a) | zellulosehaltige Komponente, bevorzugt Holzfasern: | 40 - 80 Gew.% |
| b) | Copolymer umfassend zumindest ein Poly(alkyl)(meth)acrylat und zumindest ein zyklisches Carbonsäureanhydrid-Derivatr: | 1 - 50 Gew.% |
| c) | Gleitmittel: | 0 - 5 Gew.%, bevorzugt 0,5 - 4 Gew.% |
| d) | Poly(alkyl)(meth)acrylat-Matrixpolymer: | 0 - 59 Gew.%, bevorzugt 1 - 57,5 Gew.% |
| e) | Farbstoff | 0 - 5 Gew.% |
| f) | Lichtstabilisatoren | 0 - 0.5 Gew.%, bevorzugt 0.01 - 0.2 Gew.% |
umfasst, wobei die Komponenten b) und d) zusammen 9,5 Gew.% bis 60 Gew.% des Gesamtgewichts der Komponenten a) bis f) ausmachen und sich die Summe der Komponenten a) bis f) zu 100 Gew.% ergibt.

9. Verfahren zur Herstellung eines Verbundmaterials aus zumindest einem zellulosehaltigen Material und zumindest einem Kunststoff auf Basis von Poly(alkyl)(meth)acrylaten,
**dadurch gekennzeichnet,**
**dass** zumindest ein Copolymer umfassend zumindest ein Poly(alkyl)(meth)acrylat und zumindest ein zyklisches Carbonsäureanhydrid-Derivat mit zumindest einer zellulosehaltigen Komponente und zu einem Verbundmaterial verarbeitet wird.

10. Verfahren zur Herstellung eines Verbundmaterials nach Anspruch 9,
**dadurch gekennzeichnet,**
**dass** zumindest ein Copolymer umfassend zumindest ein Poly(alkyl)(meth)acrylat und zumindest ein zyklisches Carbonsäureanhydrid-Derivat mit zumindest einer zellulosehaltigen Komponente und einem Poly(alkyl)(meth)acrylat-Matrixmaterial und/oder einem Gleitmittel und/oder weiteren Additiven und/oder Hilfsstoffen vermischt und zu einem Holz-Kunststoff-Verbundmaterial verarbeitet wird.

11. Verfahren zur Herstellung eines Verbundmaterials nach einem der Ansprüche 9 oder 10,
**dadurch gekennzeichnet,**
**dass** das Gemisch durch Extrusion oder Spritzguss, bevorzugt bei Temperaturen unterhalb von 230 °C, besonders bevorzugt unterhalb von 225 °C, ganz besonders bevorzugt von 170 bis 220 °C, speziell bevorzugt von 190 bis 215 °C und ganz speziell bevorzugt von 190 bis 210 °C, zu einem Verbundmaterial verarbeitet wird.

12. Verwendung eines Verbundmaterials nach einem der Ansprüche 1 bis 8 als Werkstoff in Bereichen mit erhöhter Feuchtigkeitseinwirkung, insbesondere im Außenbereich, wie z. B. als Bodenbeläge, z. B. als Terrassenpaneele etc., als Konstruktionsmaterialien, wie z. B. als Konstruktionshölzer, Bretter, Balken, Treppen und Treppenstufen, Pfosten, Schalungstafeln, Gartenhütten, Spieltürme, Spielgeräte, Sandkästen, Carports, Pavillons, Türzargen, Türblätter, Fensterbänke etc., als Wandelemente, als Wandverkleidungen, Schallschutzelemente, Balustraden, als Deckenverkleidungen, als Dachabdeckungen, im Schiffsbau oder zum Bau von Hafenanlagen, z. B. Bootsstegen, Bootsabweiser, Schiffdecks etc., als wartungsfreier Möbelwerkstoff im Innen- und Außenbereich, wie z.B. Stühle, Liegen, Regale, Theken, Gartenbänke, Küchenmöbel, Arbeitsplatten, Badmöbel etc., als Behälter bzw. Einfassungen, wie z. B. Raseneinfassungen, Beeteinfassungen, Rollrabatte, Blumentöpfe, Pflanztröge etc. als Spielbauklötze und im Automobilinnendekor und in der Automobilaußenverkleidung sowie als Wohnwagenanbauteile.

## Claims

1. Composite material made of at least one cellulose-containing material and of at least one plastic,
**characterized in that**
at least one plastic is composed of a copolymer comprising at least one poly(alkyl) (meth)acrylate and comprising at least one cyclic carboxylic anhydride derivative, or comprises said copolymer, preferably together with further polymers and/or additives and/or auxiliaries.

2. Composite material according to Claim 1,
**characterized in that**
it comprises a copolymer comprising at least one poly(alkyl) (meth)acrylate and at least one cyclic carboxylic anhydride derivative as adhesion promoter, and also at least one poly(alkyl) (meth)acrylate matrix material.

3. Composite material according to Claim 1 or 2,
**characterized in that**
the copolymer comprising at least one poly(alkyl) (meth)acrylate and at least one cyclic carboxylic anhydride derivative has an MVR melt index [230°C, 3.8 kg] in the range from 1 to 30 ml/10 min, preferably in the range from 3 to 15 ml/10 min.

4. Composite material according to any of Claims 1 to 3,
**characterized in that**
the proportion of the copolymer comprising at least one poly(alkyl) (meth)acrylate and comprising at least one cyclic carboxylic anhydride derivative, based on the total weight of the composite material of the invention, is from 0.5% by weight to (100 - proportion of cellulose-containing material) % by weight, or from 2% by weight to ((100 - proportion of cellulose-containing material)/2)% by weight.

5. Composite material according to any of Claims 1 to 4,
**characterized in that**
the proportion of the cyclic carboxylic anhydride derivative, based on the total weight of the composite material of the invention, is in the range from 0.1 to 5% by weight, preferably in the range from 0.4 to 3% by weight.

6. Composite material according to any of Claims 1 to 5,
**characterized in that**
the cellulose-containing material involves wood or paper or paperboard, preferably with cellulose content of at least 20% by weight, particularly preferably at least 30% by weight, very particularly preferably at least 40% by weight.

7. Composite material according to any of Claims 1 to 6,
**characterized in that**
it comprises, based in each case on the total weight of the composite material, up to 80% by weight of wood particles and at least 15% by weight of poly(alkyl) (meth)acrylate.

8. Composite material according to any of Claims 1 to 7,
**characterized in that**
it comprises the following components:
| | | |
|---|---|---|
| a) | cellulose-containing component, preferably wood fibers: | from 40 to 80% by weight |
| b) | copolymer comprising at least one poly(alkyl) (meth)acrylate and at least one cyclic carboxylic anhydride derivative: | from 1 to 50% by weight |
| c) | lubricant: | from 0 to 5% by weight, preferably from 0.5 to 4% by weight |
| d) | poly(alkyl) (meth)acrylate matrix polymer: | from 0 to 59% by weight, preferably from 1 to 57.5% by weight |
| e) | dye | from 0 to 5% by weight |
| f) | light stabilizers | from 0 to 0.5% by weight, preferably from 0.01 to 0.2% by weight |
where components b) and d) together make up from 9.5% by weight to 60% by weight of the total weight of components a) to f), and the entirety of components a) to f) gives 100% by weight.

9. Process for producing a composite material made of at least one cellulose-containing material and of at least one plastic based on poly(alkyl) (meth)acrylates,
**characterized in that**
at least one copolymer comprising at least one poly(alkyl) (meth)acrylate and at least one cyclic carboxylic anhydride derivative is processed with at least one cellulose-containing component and is processed to give a composite material.

10. Process for producing a composite material, according to Claim 9,
**characterized in that**
at least one copolymer comprising at least one poly(alkyl) (meth)acrylate and at least one cyclic carboxylic anhydride derivative is mixed with at least one cellulose-containing component and one poly(alkyl) (meth)acrylate matrix material and/or one lubricant and/or further additives and/or auxiliaries, and is processed to give a wood-plastic composite material.

11. Process for producing a composite material, according to Claim 9 or 10,
**characterized in that**
the mixture is processed through extrusion or injection molding, preferably at temperatures below 230°C, particularly preferably below 225°C, very particularly preferably from 170 to 220°C, specifically preferably from 190 to 215°C, and very specifically preferably from 190 to 210°C, to give a composite material.

12. Use of a composite material according to any of Claims 1 to 8 as material in sectors with relatively high exposure to moisture, in particular in the outdoor sector, e.g. as flooring, e.g. as garden decking, etc., as construction materials, for example as framing timber, boards, beams, staircases and staircase steps, posts, formwork panels, garden sheds, climbing frames, play equipment, sandpits, carports, gazebos, door frames, doors, window sills, etc., as walling elements, as wall cladding, sound-deadening elements, balustrades, as ceiling cladding, as roof covering, in shipbuilding, or for the construction of harbor facilities, e.g. landing stages, fenders, ship decks, etc., as maintenance-free furniture material in the indoor and outdoor sector, e.g. chairs, sunbeds, shelving, bar tops, garden seats, kitchen furniture, worktops, bathroom furniture, etc., as containers or edging, e.g. lawn edging, flower-bed edging, log-roll edging, flower pots, plant troughs, etc., as play blocks, and as decorative interiors for automobiles, and in the external shell of automobiles, and also as add-on components for mobile homes.

## Revendications

1. Matériau composite contenant au moins un matériau cellulosique et une matière plastique, **caractérisé en ce qu'**au moins une matière plastique se compose d'un copolymère, comprenant au moins un poly(alkyl) (méth)acrylate et au moins un dérivé cyclique de l'anhydride d'acide carboxylique ou comprend ledit copolymère, de préférence en compagnie d'autres polymères et/ou additifs et/ou adjuvants.

2. Matériau composite selon la revendication 1, **caractérisé en ce qu'**il comprend un copolymère comprenant au moins un poly(alkyl) (méth)acrylate et au moins un dérivé cyclique de l'anhydride d'acide carboxylique comme agent adhésif ainsi qu'au moins un matériau de matrice poly(alkyl) (méth)acrylate.

3. Matériau composite selon la revendication 1 ou 2, **caractérisé en ce que** le copolymère comprenant au moins un poly(alkyl) (méth)acrylate et au moins un dérivé cyclique de l'anhydride d'acide carboxylique présente un indice de fusion MVR [230°C, 3,8 kg] situé dans la plage de 1 à 30 ml/10 min, de préférence dans la plage de 3 à 15 ml/10 min.

4. Matériau composite selon l'une quelconque des revendications 1 à 3, **caractérisé en ce que** la part du copolymère comprenant au moins un poly(alkyl) (méth)acrylate et au moins un dérivé cyclique de l'anhydride d'acide carboxylique, rapportée au poids total du matériau composite selon l'invention, vaut 0,5 % en poids à (100 - part du matériau cellulosique) % en poids, ou 2 % en poids à ((100 - part du matériau cellulosique)/2) % en poids.

5. Matériau composite selon l'une quelconque des revendications 1 à 4, **caractérisé en ce que** la part du dérivé cyclique de l'anhydride de l'acide carboxylique, rapportée au poids total du matériau composite selon l'invention, se situe dans la plage de 0,1 à 5 % en poids, de préférence dans la plage de 0,4 à 3 % en poids.

6. Matériau composite selon l'une quelconque des revendications 1 à 5, **caractérisé en ce que** le matériau cellulosique est du bois ou du papier ou du carton, de préférence avec une part de cellulose d'au moins 20 % en poids, de préférence encore d'au moins 30 % en poids, et de préférence particulière encore d'au moins 40 % en poids.

7. Matériau composite selon l'une quelconque des revendications 1 à 6, **caractérisé en ce qu'**il présente, par rapport au poids total du matériau composite selon l'invention, jusqu'à 80 % en poids de particules de bois ainsi qu'au moins 15 % en poids de poly(alkyl) (méth)acrylate.

8. Matériau composite selon l'une quelconque des revendications 1 à 7, **caractérisé en ce qu'**il comprend les composants suivants:
| | | |
|---|---|---|
| a) | composant cellulosique, de préférence fibres de bois: | 40-80 % en poids |
| b) | copolymère comprenant au moins un poly(alkyl) (méth)acrylate et au moins un dérivé cyclique de l'anhydride d'acide carboxylique: | 1-50 % en poids |
| c) | lubrifiant: | 0-5 % en poids, de préférence 0,5-4 % en poids |
| d) | polymère de matrice poly(alkyl) (méth)acrylate: | 0-59 % en poids, de préférence 1-57,5 % en poids |
| e) | colorant: | 0-5 % en poids |
| f) | photostabilisants: | 0-0,5 % en poids, de préférence 0,01-0,2 % en poids |
dans lequel les composants b) et d) forment ensemble 9,5 % en poids à 60 % en poids du poids total des composants a) à f) et la somme des composants a) à f) vaut 100 % en poids.

9. Procédé de fabrication d'un matériau composite contenant au moins un matériau cellulosique et au moins une matière plastique à base de poly(alkyl) (méth)acrylates, **caractérisé en ce que** l'on mélange au moins un copolymère comprenant au moins un poly(alkyl) (méth)acrylate et au moins un dérivé cyclique de l'anhydride de l'acide carboxylique avec au moins un composant cellulosique et on le transforme en un matériau composite.

10. Procédé de fabrication d'un matériau composite selon la revendication 9, **caractérisé en ce que** l'on mélange au moins un copolymère comprenant au moins un poly(alkyl) (méth)acrylate et au moins un dérivé cyclique de l'anhydride d'acide carboxylique avec au moins un composant cellulosique et un matériau de matrice poly(alkyl) (méth)acrylate et/ou un lubrifiant et/ou d'autres additifs et/ou adjuvants et on le transforme en un matériau composite bois - matière plastique.

11. Procédé de fabrication d'un matériau composite selon l'une des revendications 9 ou 10, **caractérisé en ce que** l'on transforme le mélange en un matériau composite par extrusion ou moulage par injection, de préférence à des températures inférieures à 230°C, de préférence encore inférieures à 225°C, de préférence particulière encore de 170 à 220°C, de préférence toute particulière encore de 190 à 215°C, et de préférence très particulière encore de 190 à 210°C.

12. Utilisation d'un matériau composite selon l'une quelconque des revendications 1 à 8 comme matériau dans des zones soumises à une humidité accrue, en particulier à l'extérieur, comme par exemple comme revêtements de sol, par exemple comme panneaux pour terrasses, etc., comme matériaux de construction, comme par exemple comme bois de construction, planches, poutres, escaliers et marches d'escaliers, poteaux, panneaux de coffrage, abris de jardin, tours de jeux, appareils de jeux, bacs à sable, carports, pavillons, châssis de porte, vantaux de porte, appuis de fenêtre, etc., comme éléments de murs, comme revêtements de murs, comme éléments d'insonorisation, balustrades, comme revêtements de plafonds, comme couvertures de toitures, dans la construction navale ou pour la construction d'installations portuaires, par exemple jetées, ducs d'albe, ponts de bateaux, etc., comme matériau sans entretien pour meubles intérieurs et extérieurs, comme par exemple chaises, chaises longues, étagères, comptoirs, bancs de jardin, meubles de cuisine, plans de travail, meubles de salle de bain, etc., comme récipients ou bordures, comme par exemple bordures de pelouses, bordures de plates bandes, bordures en rouleaux, bacs à fleurs, jardinières, etc., comme blocs de jeux de construction et dans la décoration intérieure des automobiles, et dans l'habillage extérieur des automobiles ainsi que comme composants de caravanes.
